# EUROPEAN PATENT SPECIFICATION

(11) **EP 2 983 085 B1**
(45) Date of publication and mention of the grant of the patent: **10.10.2018**
(21) Application number: 15180158.6
(22) Date of filing: 07.08.2015
(51) Int. Cl.: G06F 9/4401, G06F 9/54, G06F 13/00, H04L 12/26, H04L 12/24, G06F 9/445

(54) **METHOD AND APPARATUS FOR INFORMING CONNECTION CONDITION BETWEEN EXTERNAL DEVICE AND ROUTER**
VERFAHREN UND VORRICHTUNG ZUM INFORMIEREN DES VERBINDUNGSZUSTANDS ZWISCHEN EINER EXTERNEN VORRICHTUNG UND ROUTER
PROCÉDÉ ET APPAREIL PERMETTANT DE SIGNALER UN ÉTAT DE CONNEXION ENTRE UN DISPOSITIF EXTERNE ET UN ROUTEUR

(30) Priority: 08.08.2014 CN 201410389817
(43) Date of publication of application: 10.02.2016
(73) Proprietor: Xiaomi Inc., Beijing 100085 (CN)
(72) Inventor: LIU, Tiejun, 100085 Haidian District (CN); CHENG, Liang, 100085 Haidian District (CN); LI, Zheng, 100085 Haidian District (CN)
(74) Representative: Sadler, Peter Frederick

(56) References cited:
- US-A1- 2007 233 928
- US-B1- 7 082 598

## Description

### TECHNICAL FIELD

The present disclosure generally relates to a plugin platform navigation technology of a router, and more particularly, to a method and an apparatus for informing a connection condition between an external device and a router.

### BACKGROUND

In related art, a router developer adds a function of a plugin platform in a router, and a third-party developer can develop a plugin according to a document and a software development kit (SDK) disclosed by the router developer, and the developed plugin can run in the plugin platform.

However, if an external device is connected to the router (i.e., plug the external device into the router), or if the external device is disconnected from the router (i.e., remove the external device from the router), the router cannot inform the plugin of the connection condition between the external device and the router, and the plugin cannot obtain the connection condition between the external device and the router, which causes inconvenience to exerting a function of the plugin.

US patent US7082598 describes a method for dynamically substituting hardware drivers. An agent loaded in a computer's operating system simulates disconnection and reconnection of a device, with no need to actually disconnect the device logically from a computer. During stimulated reconnection, when the operating system requests the hardware ID of the device, the agent returns a substitute ID, which causes the operating system to load a substitute driver. When a program or application wishes to switch a driver for a connected device a request to do so is communicated to the agent via an API, requesting the device parent to scan all of its ports to determine the connection status of each port. The aim is to stimulate disconnection of a particular hardware device then stimulate reconnection of the device and substituting an ID for the device such that the operating system loads a substitute driver to which the substitute ID is mapped in the operating system registry. As such, the agent monitors the scanning process of the ports and, when a port of interest is scanned, the connection reply that indicates a connection status is altered to incorrectly report "false" or "disconnected" such that the agent lies about the actual connection status, which allows the operating system to remove the particular device logically from the computer, including notifying applications that may have previously pointed to the device.

US patent application US2007/0233928 describes a method for dynamically allocating resources to route ports, whereby upon initializing of a system, resources such as memory space etc. are allocated to devices and corresponding windows are assigned to route ports upstream from the devices. When a new device is inserted at run time, a handler may assign an appropriate resource window from a remaining number of resources to the route port upstream from the newly added device. The handler routine notifies a user level program when the hardware device is present or removed using internal PCI communication protocols.

### SUMMARY

The invention is defined by the claims, to which attention is now drawn. Embodiments of the present disclosure provide a method and an apparatus for informing a connection condition between an external device and a router, which can inform a plugin of the router of the connection condition between the external device and the router, and facilitate the plugin to fully function.

According to a first aspect of embodiments of the present disclosure, there is provided a method for informing a connection condition between an external device and a router. The method can be used in a plugin center of the router and includes:
monitoring whether a predetermined behavior occurs, in which the predetermined behavior includes connecting the external device to the router or disconnecting the external
device from the router;
determining a registered port of a plugin of the router in ports of the plugin center if the predetermined behavior occurs;
sending through the registered port of the plugin a first notification configured to indicate that the predetermined behavior occurs to the plugin.

The plugin center is a program executed on the router having one or more ports associated with it, and that manages the ports assigned to plugins.

The method further includes starting a thrift server of the plugin; connecting the plugin center with the thrift server through a socket communication; and receiving (SI03), from the thrift server through the registered port of the plugin a first notification configured to indicate that the predetermined behavior occurs to the plugin.

In an embodiment, monitoring whether a predetermined behavior occurs includes:
monitoring whether a second notification is received, wherein the second notification is configured to indicate that the predetermined behavior occurs.

In an embodiment, determining a registered port of a plugin of the router in ports of a plugin center if the predetermined behavior occurs includes:
determining the registered port of the plugin in the ports of the plugin center according to a pre-stored one to one correspondence between the port of the plugin center and the plugin of the router, if the predetermined behavior occurs.

In an embodiment, the method further includes:
obtaining a port registration request from the plugin;
searching for a free port in the ports of the plugin center, registering the plugin in the free port and establishing the one to one correspondence between the registered port of the plugin and the plugin;
storing the one to one correspondence.

According to a second aspect of embodiments of the present disclosure, there is provided an apparatus for informing a connection condition between an external device and a router, including:
a monitoring module, configured to monitor whether a predetermined behavior occurs, in which the predetermined behavior includes connecting the external device to the router or disconnecting the external device from the router;
a determining module, configured to determine a registered port of a plugin of the router in ports of a plugin center if the monitoring module monitors that the predetermined behavior occurs.

The apparatus further comprises a starting unit (51), configured to start a thrift server of the plugin; and an informing unit (52), configured to connect the plugin center with the thrift server through a socket communication, wherein the thrift server is configured to send the first notification to the plugin through the registered port of the plugin.

In an embodiment, the monitoring module includes:
a monitoring unit, configured to monitor whether a second notification is received, wherein the second notification is configured to indicate that the predetermined behavior occurs.

In an embodiment, the determining module includes:
a determining unit, configured to determine the registered port of the plugin in the ports of the plugin center according to a pre-stored one to one correspondence between the port of the plugin center and the plugin of the router, if the monitoring module monitors that the predetermined behavior occurs.

In an embodiment, the apparatus further includes:
an obtaining module, configured to obtain a port registration request from the plugin;
an establishing module, configured to search for a free port in the ports of the plugin center, to register the plugin in the free port and to establish the one to one correspondence between the registered port of the plugin and the plugin;
a storing module, configured to store the one to one correspondence.

According to a third aspect of embodiments of the present disclosure, there is provided an apparatus for informing a connection condition between an external device and a router, including:
a processor;
a memory configured to store an instruction executable by the processor;
in which the processor is configured to:
   monitor whether a predetermined behavior occurs, in which the predetermined behavior includes connecting the external device to the router or disconnecting the external device from the router;
   determine a registered port of a plugin of the router in ports of a plugin center, if the predetermined behavior occurs;
   send through the registered port of the plugin a first notification to the plugin, wherein the first notification is configured to indicate that the predetermined occurs.

The technical solution provided by embodiments of the present disclosure has following beneficial effects.

With the above technical solution provided by embodiments of the present disclosure, if behaviors such as connecting the external device to the router or disconnecting the external device from the router occur, the plugin center of the router informs the plugin of the router of occurrences of these behaviors, such that the plugin of the router can obtain the connection condition between the external device and the router and can fully function by using the external device, thus improving a user experience of the plugin.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a method for informing a connection condition between an external device and a router, according to an exemplary embodiment.
Fig. 2 is a flow chart showing another method for informing a connection condition between an external device and a router, according to an exemplary embodiment.
Fig. 3 is a block diagram showing an apparatus for informing a connection condition between an external device and a router, according to an exemplary embodiment.
Fig. 4 is a block diagram showing another apparatus for informing a connection condition between an external device and a router, according to an exemplary embodiment.
FIG. 5 is a block diagram showing an informing module, according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

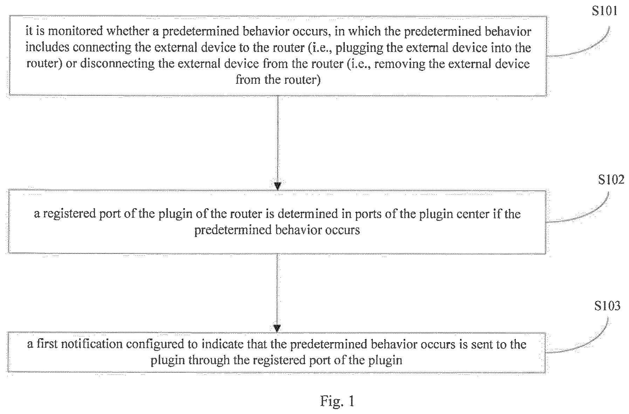

Fig. 1 is a flow chart of a method for informing a connection condition between an external device and a router, according to an exemplary embodiment, in which the method is used in a plugin center of the router and the plugin center may be a background program started by the router. As shown in Fig. 1, the method includes following steps S101-S103.

In step S101, it is monitored whether a predetermined behavior occurs, in which the predetermined behavior includes connecting the external device to the router (i.e., plugging the external device into the router) or disconnecting the external device from the router (i.e., removing the external device from the router).

In an embodiment, the step S101 may be implemented as follows. It is monitored whether a second notification is received, in which the second notification is used to indicate that the predetermined behavior occurs. For example, a monitoring device in the router monitors whether the predetermined behavior occurs, and the monitoring device sends the second notification to the plugin center if the predetermined behavior occurs.

An external interface is provided on the router and is configured to connect the external device. The external interface may be a wired interface or a wireless interface, i.e., the external device may be connected with the router via a wired connection or a wireless connection. If the external device is connected to the external interface or if the external device is removed from the external interface, the external interface sends the second notification to the plugin center of the router.

In step S102, a registered port of the plugin of the router is determined in ports of the plugin center if the predetermined behavior occurs.

In an embodiment, the step S102 may be implemented as follows. The registered port of the plugin is determined in the ports of the plugin center according to a pre-stored one to one correspondence between the port of the plugin center and the plugin of the router. The above one to one correspondence may be stored in a configuration file. The configuration file can declare a function of the plugin in addition to recording the above one to one correspondence. For example, the plugin center stores a configuration file which is recorded in a format of key-value type and includes three parameters: appid, port and capability. The appid represents an ID of the plugin, the port represents a registered port number of the plugin and the capability represents the capability of the plugin. For example, a configuration file includes following content:
appid=2919291939, port=10001, capability=USBDISK.

The above content represents that: a plugin has an ID of 2919291939 and a registered port No. 10001 of the plugin center, and the plugin knows whether a USB device is connected to the router or whether the USB device is disconnected from the router.

In step S103, a first notification configured to indicate that the predetermined behavior occurs is sent to the plugin through the registered port of the plugin.

In an embodiment, the step S103 may be implemented as follows. A thrift server of the plugin is started, the plugin center is connected with the thrift server through a socket communication, and the thrift server of the plugin sends the first notification to the plugin through the registered port of the plugin.

With the above method provided by embodiments of the present disclosure, if behaviors such as connecting the external device to the router or disconnecting the external device form the router occur, the plugin center informs the plugin of the router of occurrences of these behaviors, such that the plugin of the router can obtain the connection condition between the external device and the router and can fully function by using the external device, thus improving a user experience of the plugin.

In an embodiment, the method further includes establishing the one to one correspondence and storing the one to one correspondence by the plugin center, which process includes following steps A1-A3.

In step A1, a port registration request sent from the plugin is obtained.

In step A2, a free port is searched for in the ports of the plugin center, the plugin is registered in the free port and the one to one correspondence between the registered port of the plugin and the plugin is established.

In step A3, the one to one correspondence is stored.

The searching and registering may be implemented by a predetermined program, for example, the steps A1-A3 may be implemented as follows. A request of calling an interface of a predetermined program sent from the plugin is obtained; the predetermined program is started to search for the free port in the ports of the plugin center, to register the plugin in the free port and to establish the one to one correspondence between the registered port of the plugin and the plugin; the one to one correspondence sent from the predetermined program is obtained and stored, in which the predetermined program may be a SDK or an application program of other types.

The method provided by embodiments of the present disclosure will be described in an embodiment in the following.

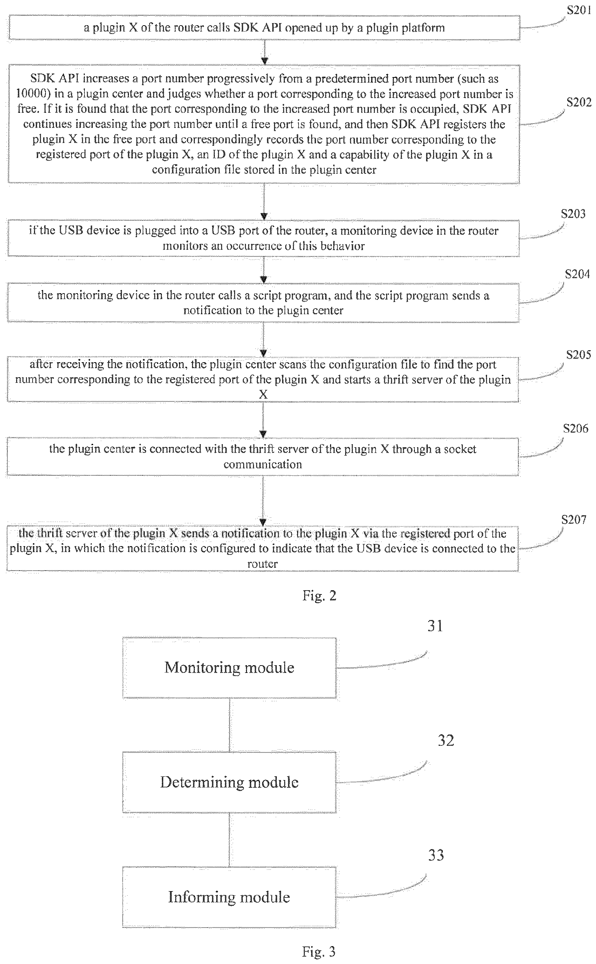

In the embodiment, for example, the external device may be a USB device, the router starts a background program (i.e., plugin center) after the router is started. As shown in Fig. 2, the embodiment includes following steps.

In step S201, a plugin X of the router calls SDK API opened up by a plugin platform.

In step S202, SDK API increases a port number progressively from a predetermined port number (such as 10000) in a plugin center and judges whether a port corresponding to the increased port number is free. If it is found that the port corresponding to the increased port number is occupied, SDK API continues increasing the port number until a free port is found, and then SDK API registers the plugin X in the free port and correspondingly records the port number corresponding to the registered port of the plugin X, an ID of the plugin X and a capability of the plugin X in a configuration file stored in the plugin center (assuming that appid=2919291939, port=10001, capability=USBDISK).

In step S203, if the USB device is plugged into a USB port of the router, a monitoring device in the router monitors an occurrence of this behavior.

In step S204, the monitoring device in the router calls a script program, and the script program sends a notification to the plugin center, in which the notification is configured to indicate that the USB device is connected to the router.

In step S205, after receiving the notification, the plugin center scans the configuration file to find the port number corresponding to the registered port of the plugin X and starts a thrift server of the plugin X.

In step S206, the plugin center is connected with the thrift server of the plugin X through a socket communication.

In step S207, the thrift server of the plugin X sends a notification to the plugin X via the registered port of the plugin X, in which the notification is configured to indicate that the USB device is connected to the router.

In the embodiment, if behaviors such as connecting the USB device to the router or disconnecting the USB device from the router occur, the plugin center of the router informs the plugin of the router of occurrences of these behaviors, such that the plugin of the router can obtain the connection condition between the USB device and the router and can fully function by using the USB device, thus improving a user experience of the plugin.

Fig. 3 is a block diagram illustrating an apparatus for informing a connection condition between an external device and a router, according to an exemplary embodiment. The apparatus may be used in a router or a plugin center of the router and includes:
a monitoring module 31, configured to monitor whether a predetermined behavior occurs, in which the predetermined behavior includes connecting the external device to the router or disconnecting the external device from the router;
a determining module 32, configured to determine a registered port of a plugin of the router in ports of a plugin center if the monitoring module monitors that the predetermined behavior occurs;
an informing module 33, configured to send through the registered port of the plugin determined by the determined module 32 a first notification to the plugin, wherein the first notification is configured to indicate that the predetermined behavior occurs.

In an embodiment, monitoring module includes:
a monitoring unit, configured to monitor whether a second notification is received, in which the second notification is configured to indicate that the predetermined behavior occurs.

In an embodiment, the determining module includes:
a determining unit, configured to determine the registered port of the plugin in the ports of the plugin center according to a pre-stored one to one correspondence between the port of the plugin center and the plugin of the router if the monitoring module monitors that the predetermined behavior occurs.

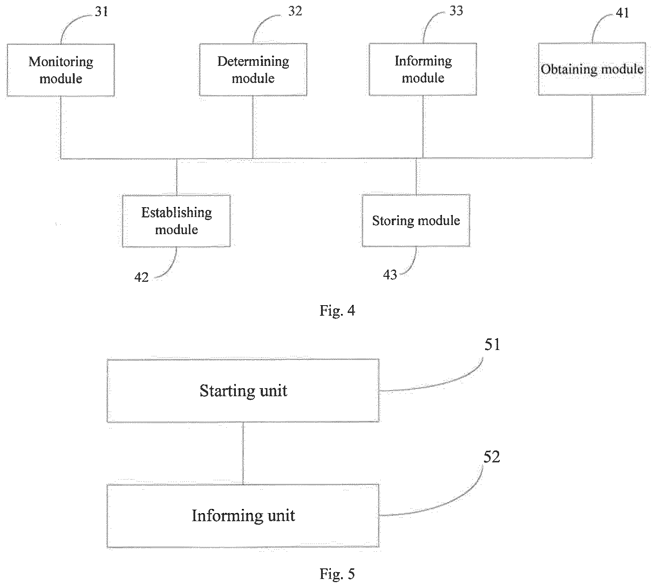

In an embodiment, as shown in Fig. 4, the apparatus further includes:
an obtaining module 41, configured to obtain a port registration request from the plugin;
an establishing module 42, configured to search for a free port in the ports of the plugin center, to register the plugin in the free port and to establish the one to one correspondence between the registered port of the plugin and the plugin;
a storing module 43, configured to store the one to one correspondence.

In an embodiment, as shown in Fig. 5, the informing module 33 includes:
a starting unit 51, configured to start a thrift server of the plugin;
an informing unit 52, configured to connect with the thrift server through a socket communication, wherein the thrift server is configured to send the first notification to the plugin through the registered port of the plugin.

An apparatus for informing a connection condition between an external device and a router may be used in a router or a plugin center in the router and include:
a processor;
a memory configured to store an instruction executable by the processor;
in which the processor is configured to:
   monitor whether a predetermined behavior occurs, in which the predetermined behavior includes: connecting the external device to the router or disconnecting the external device with the router;
   determine a registered port of a plugin of the router in ports of a plugin center, if the predetermined behavior occurs;
   send through the registered port of the plugin a first notification to the plugin, wherein the first notification is configured to indicate that the predetermined occurs.

The processor is further configured to:
monitor whether a second notification is received, in which the second notification is configured to indicate that the predetermined behavior occurs.

The processor is further configured to:
determine the registered port of the plugin in the ports of the plugin center according to a pre-stored one to one correspondence between the port of the plugin center and the plugin of the router, if the monitoring module monitors that the predetermined behavior occurs.

The processor is further configured to:
obtain a port registration request from the plugin;
search for a free port in the ports of the plugin center, register the plugin in the free port and establish the one to one correspondence between the registered port of the plugin and the plugin;
store the one to one correspondence.

The processor is further configured to:
start a thrift server of the plugin;
connect with the thrift server through a socket communication, wherein the thrift server is configured to send the first notification to the plugin through the registered port of the plugin.

With the apparatus provided by embodiments of the present disclosure, if behaviors such as connecting the external device to the router or disconnecting the external device from the router occur, the plugin center of the router informs the plugin of the router of occurrences of these behaviors, such that the plugin of the router can obtain the connection condition between the external device and the router and can fully function by using the external device, thus improving a user experience of the plugin.

With respect to the apparatuses in the above embodiments, the specific operation manners of respective modules have been described in detail in the embodiments regarding the methods for informing a connection condition between an external device and a router, and thus details thereof are omitted herein.

A non-transitory computer-readable storage medium is provided, in which when instructions in the storage medium are executed by a processor of a client, the client may execute a method for informing a connection condition between an external device and a router, and the method includes:
monitoring whether a predetermined behavior occurs, in which the predetermined behavior includes connecting the external device to the router or disconnecting the external device from the router;
determining a registered port of a plugin of the router in ports of a plugin center if the predetermined behavior occurs;
sending through the registered port of the plugin a first notification configured to indicate that the predetermined behavior occurs to the plugin.

In an embodiment, monitoring whether a predetermined behavior occurs includes:
monitoring whether a second notification is received, in which the second notification is configured to indicate that the predetermined behavior occurs.

In an embodiment, determining a registered port of a plugin of the router in ports of a plugin center if the predetermined behavior occurs includes:
determining the registered port of the plugin in the ports of the plugin center according to a pre-stored one to one correspondence between the port of the plugin center and the plugin of the router, if the predetermined behavior occurs.

In an embodiment, the method further includes:
obtaining a port registration request from the plugin;
searching for a free port in the ports of the plugin center, registering the plugin in the free port and establishing the one to one correspondence between the registered port of the plugin and the plugin;
storing the one to one correspondence.

In an embodiment, sending through the registered port of the plugin a first notification configured to indicate that the predetermined occurs to the plugin includes:
starting a thrift server of the plugin;
connecting with the thrift server through a socket communication, and sending by the thrift server the first notification to the plugin through the registered port of the plugin.

Other embodiments of the invention will be apparent to those skilled in the art from consideration of the specification and practice of the invention disclosed here. This application is intended to cover any variations, uses, or adaptations of the invention following the general principles thereof and including such departures from the present disclosure as come within known or customary practice in the art.

## Claims

1. A method that informs a connection condition between an external device and a router, the router including a plugin platform that runs third party developed plugins, the method comprising, at the router or at a plugin center of the router:
monitoring (S101) whether a predetermined behavior occurs, wherein the predetermined behavior comprises connecting the external device to the router or disconnecting the external device from the router;
wherein the plugin center is a program executed on the router having one or more software ports associated with it, and that manages the software ports assigned to plugins, and a registered port is a port, determined from the ports of the plugin center, that has a pre-stored one to one correspondence with a plugin of the router, and the method further comprises determining (S102) which of the software ports of the plugin center is a registered software port of a plugin of the router if the predetermined behavior occurs; and
sending (S103) to the plugin, through the registered software port of the plugin, a first notification configured to indicate that the predetermined behavior occurs.

2. The method according to claim 1, wherein monitoring whether a predetermined behavior occurs comprises:
monitoring whether a notification is received from an external interface, wherein the notification from the external interface is configured to indicate that the predetermined behavior occurs, and the external interface is provided on the router and is configured to connect the external device.

3. The method according to claim 1 or 2, wherein determining which of the ports of the plugin center is a registered port of a plugin of the router comprises:
storing the one to one correspondence with the plugin of the router in a configuration file having a key-value type format, the configuration file including an identifier of the plugin of the router, a port number of the registered port of the plugin center and the capability of the plugin; and
determining the registered port according to a pre-stored one to one correspondence between the port number of the registered port of the plugin center and the identifier of the plugin of the router, if the predetermined behavior occurs.

4. The method according to claim 3, further comprising:
obtaining a port registration request from the plugin;
searching for a free port in the ports of the plugin center, registering the plugin to the free port and establishing the one to one correspondence between the port number of the registered port of the plugin and the identifier of the plugin;
storing the one to one correspondence.

5. The method according to any preceding claim, wherein sending to the plugin, through the registered port of the plugin a first notification configured to indicate that the predetermined behavior occurs, comprises:
starting a thrift server of the plugin;
connecting the plugin center with the thrift server of the plugin through a socket communication, and sending by the thrift server the first notification to the plugin through the registered port of the plugin.

6. A router including a plugin platform that runs third party developed plugins and a plugin center, the router comprising:
a monitoring module (31), configured to monitor whether a predetermined behavior occurs, wherein the predetermined behavior comprises connecting the external device to the router or disconnecting the external device from the router;
wherein the plugin center is a program executed on the router having one or more software ports associated with it, and that manages the software ports assigned to plugins, and a registered port is a port, determined from the ports of the plugin center, that has a pre-stored one to one correspondence with a plugin of the router, and the router further comprises a determining module (32), configured to determine which of the ports of the plugin center is a registered software port of a plugin of the router if the monitoring module (31) monitors that the predetermined behavior occurs; and
an informing module (33), configured to send through the registered software port of the plugin a first notification to the plugin, wherein the first notification is configured to indicate that the predetermined behavior occurs.

7. The router according to claim 6, wherein the monitoring module (31) comprises:
a monitoring unit, configured to monitor whether a notification is received from an external interface, wherein the notification from the external interface is configured to indicate that the predetermined behavior occurs, and the external interface is provided on the router and is configured to connect the external device.

8. The router according to claim 6 or 7, wherein the router is configured to store the one to one correspondence with the plugin of the router in a configuration file having a key-value type format, the configuration file including an identifier of the plugin of the router, a port number of the registered port of the plugin center and the capability of the plugin; and
the determining module (32) comprises:
a determining unit, configured to determine which of the ports of the plugin center is the registered port of the plugin of the router according to a pre-stored one to one correspondence between the port number of the registered port of the plugin center and the identifier of the plugin of the router, if the monitoring module (31) monitors that the predetermined behavior occurs.

9. The router according to claim 8, further comprising:
an obtaining module (41), configured to obtain a port registration request from the plugin;
an establishing module (42), configured to search for a free port in the ports of the plugin center, to register the plugin in the free port and to establish the one to one correspondence between the port number of the registered port of the plugin and the identifier of the plugin;
a storing module (43), configured to store the one to one correspondence.

10. The router according to any of claims 6 to 9, wherein the informing module (33) comprises:
a starting unit (51), configured to start a thrift server of the plugin;
an informing unit (52), configured to connect the plugin center with the thrift server of the plugin through a socket communication, wherein the thrift server is configured to send the first notification to the plugin through the registered port of the plugin.

11. A computer program comprising instructions which, when executed on a processor at a router, cause the processor to execute all the steps of a method according to any of claims 1 to 5.

## Patentansprüche

1. Verfahren zum Informieren über einen Verbindungszustand zwischen einem externen Gerät und einem Router, wobei der Router eine Plugin-Platform beinhaltet, die fremdentwickelte Plugins abarbeitet, wobei das Verfahren an dem Router oder an einem Plugin-Center des Routers Folgendes beinhaltet:
Überwachen (S101), ob ein vorbestimmtes Verhalten auftritt, wobei das vorbestimmte Verhalten das Verbinden des externen Geräts mit dem Router oder das Abtrennen des externen Geräts von dem Router beinhaltet;
wobei das Plugin-Center ein Programm ist, das auf dem Router abgearbeitet wird, mit einem oder mehreren damit assoziierten Software-Ports, und das die Plugins zugeordneten Software-Ports verwaltet, und ein registrierter Port ein Port ist, bestimmt anhand der Ports des Plugin-Center, der eine vorgespeicherte Eins-zu-Eins-Korrespondenz mit einem Plugin des Routers hat, und das Verfahren ferner das Bestimmen (S102) beinhaltet, welcher der Software-Ports des Plugin-Center ein registrierter Software-Port eines Plugin des Routers ist, wenn das vorbestimmte Verhalten auftritt; und
Senden (S103) zu dem Plugin, durch den registrierten Software-Port des Plugin, einer ersten Benachrichtigung, konfiguriert zum Anzeigen, dass das vorbestimmte Verhalten auftritt.

2. Verfahren nach Anspruch 1, wobei das Überwachen, ob ein vorbestimmtes Verhalten auftritt, Folgendes beinhaltet:
Überwachen, ob eine Benachrichtigung von einer externen Schnittstelle empfangen wird, wobei die Benachrichtigung von der externen Schnittstelle zum Anzeigen konfiguriert ist, dass das vorbestimmte Verhalten auftritt, und die externe Schnittstelle auf dem Router vorgesehen und zum Verbinden des externen Geräts konfiguriert ist.

3. Verfahren nach Anspruch 1 oder 2, wobei das Bestimmen, welcher der Ports des Plugin-Center ein registrierter Port eines Plugin des Routers ist, Folgendes beinhaltet:
Speichern der Eins-zu-Eins-Korrespondenz mit dem Plugin des Routers in einer Konfigurationsdatei mit einem Format des Schlüssel-Wert-Typs, wobei die Konfigurationsdatei eine Kennung des Plugin des Routers, eine Portnummer des registrierten Ports des Plugin-Center und die Fähigkeit des Plugin beinhaltet; und
Bestimmen des registrierten Ports gemäß einer vorgespeicherten Eins-zu-Eins-Korrespondenz zwischen der Portnummer des registrierten Ports des Plugin-Center und der Kennung des Plugin des Routers, wenn das vorbestimmte Verhalten auftritt.

4. Verfahren nach Anspruch 3, das ferner Folgendes beinhaltet:
Einholen einer Portregistrierungsanforderung von dem Plugin;
Suchen nach einem freien Port in den Ports des Plugin-Center, Registrieren des Plugin bei dem freien Port und Einrichten der Eins-zu-Eins-Korrespondenz zwischen der Portnummer des registrierten Ports des Plugin und der Kennung des Plugin;
Speichern der Eins-zu-Eins-Korrespondenz.

5. Verfahren nach einem vorherigen Anspruch, wobei das Senden zum Plugin, durch den registrierten Port des Plugin, einer ersten Benachrichtigung, die zum Anzeigen konfiguriert ist, dass das vorbestimmte Verhalten auftritt, Folgendes beinhaltet:
Starten eines Thrift-Servers des Plugin;
Verbinden des Plugin-Center mit dem Thrift-Server des Plugin durch eine Socket-Kommunikation, und Senden, durch den Thrift-Server, der ersten Benachrichtigung zu dem Plugin durch den registrierten Port des Plugin.

6. Router mit einer Plugin-Platform, die fremdentwickelte Plugins und ein Plugin-Center abarbeitet, wobei der Router Folgendes umfasst:
ein Überwachungsmodul (31), konfiguriert zum Überwachen, ob ein vorbestimmtes Verhalten auftritt, wobei das vorbestimmte Verhalten das Verbinden des externen Geräts mit dem Router oder das Abtrennen des externen Geräts von dem Router beinhaltet;
wobei das Plugin-Center ein Programm ist, das auf dem Router ausgeführt wird, mit einem oder mehreren damit assoziierten Software-Ports, und die Plugins zugeordneten Software-Ports verwaltet, und ein registrierter Port ein Port ist, bestimmt anhand der Ports des Plugin-Center, der eine vorgespeicherte Eins-zu-Eins-Korrespondenz mit einem Plugin des Routers hat, und der Router ferner ein Bestimmungsmodul (32) umfasst, konfiguriert zum Bestimmen, welcher der Ports des Plugin-Center ein registrierter Software-Port eines Plugin des Routers ist, wenn das Überwachungsmodul (31) überwacht, dass das vorbestimmte Verhalten auftritt; und
ein Informationsmodul (33), konfiguriert zum Senden, durch den registrierten Software-Port des Plugin, einer ersten Benachrichtigung zu dem Plugin, wobei die erste Benachrichtigung konfiguriert ist zum Anzeigen, dass das vorbestimmte Verhalten auftritt.

7. Router nach Anspruch 6, wobei das Überwachungsmodul (31) Folgendes umfasst:
eine Überwachungseinheit, konfiguriert zum Überwachen, ob eine Benachrichtigung von einer externen Schnittstelle empfangen wird, wobei die Benachrichtigung von der externen Schnittstelle konfiguriert ist zum Anzeigen, dass das vorbestimmte Verhalten auftritt, und die externe Schnittstelle auf dem Router vorgesehen und zum Verbinden des externen Geräts konfiguriert ist.

8. Router nach Anspruch 6 oder 7, wobei der Router zum Speichern der Eins-zu-Eins-Korrespondenz mit dem Plugin des Routers in einer Konfigurationsdatei mit einem Format des Schlüssel-Wert-Typs konfiguriert ist, wobei die Konfigurationsdatei eine Kennung des Plugin des Routers, eine Portnummer des registrierten Ports des Plugin-Center und die Fähigkeit des Plugin beinhaltet; und
wobei das Bestimmungsmodul (32) Folgendes umfasst:
eine Bestimmungseinheit, konfiguriert zum Bestimmen, welcher der Ports des Plugin-Center der registrierte Port des Plugin des Routers ist, gemäß einer vorgespeicherten Eins-zu-Eins-Korrespondenz zwischen der Portnummer des registrierten Ports des Plugin-Center und der Kennung des Plugin des Routers, wenn das Überwachungsmodul (31) überwacht, dass das vorbestimmte Verhalten auftritt.

9. Router nach Anspruch 8, der ferner Folgendes umfasst:
ein Einholmodul (41), konfiguriert zum Einholen einer Portregistrierungsanforderung von dem Plugin;
ein Einrichtungsmodul (42), konfiguriert zum Suchen nach einem freien Port in den Ports des Plugin-Center, zum Registrieren des Plugin bei dem freien Port und zum Einrichten der Eins-zu-Eins-Korrespondenz zwischen der Portnummer des registrierten Ports des Plugin und der Kennung des Plugin;
ein Speichermodul (43), konfiguriert zum Speichern der Eins-zu-Eins-Korrespondenz.

10. Router nach einem der Ansprüche 6 bis 9, wobei das Informationsmodul (33) Folgendes umfasst:
eine Starteinheit (51), konfiguriert zum Starten eines Thrift-Servers des Plugin;
eine Informationseinheit (52), konfiguriert zum Verbinden des Plugin-Center mit dem Thrift-Server des Plugin durch eine Socket-Kommunikation, wobei der Thrift-Server zum Senden der ersten Benachrichtigung zum Plugin durch den registrierten Port des Plugin konfiguriert ist.

11. Computerprogramm, das Befehle umfasst, die bei Ausführung auf einem Prozessor an einem Router bewirken, dass der Prozessor alle Schritte des Verfahrens nach einem der Ansprüche 1 bis 5 durchführt.

## Revendications

1. Procédé qui signale un état de connexion entre un dispositif externe et un routeur, le routeur comprenant une plate-forme de modules d'extension qui passe des modules d'extension développés par des tiers, le procédé comprenant, au routeur ou à un centre de modules d'extension du routeur :
contrôler (S101) si un comportement prédéterminé survient, où le comportement prédéterminé comprend connecter le dispositif externe au routeur ou déconnecter le dispositif externe du routeur ;
dans lequel le centre de modules d'extension est un programme exécuté sur le routeur ayant un ou plusieurs ports logiciels qui lui sont associés et qui gère les ports logiciels attribués aux modules d'extension, et un port enregistré est un port, déterminé parmi les ports du centre de modules d'extension, qui a une correspondance bijective avec un module d'extension du routeur, et le procédé comprend en outre déterminer (S102) lequel des ports logiciels du centre de modules d'extension est un port logiciel enregistré d'un module d'extension du routeur si le comportement prédéterminé survient ; et
envoyer (S103) au module d'extension, par le port logiciel enregistré du module d'extension, une première notification configurée pour indiquer que le comportement prédéterminé survient.

2. Procédé selon la revendication 1, dans lequel contrôler si un comportement prédéterminé survient comprend :
contrôler si une notification est reçue d'une interface externe, où la notification de l'interface externe est configurée pour indiquer que le comportement prédéterminé survient, et l'interface externe est fournie sur le routeur et est configurée pour connecter le dispositif externe.

3. Procédé selon la revendication 1 ou 2, dans lequel déterminer lequel des ports du centre de modules d'extension est un port enregistré d'un module d'extension du routeur comprend :
stocker la correspondance bijective avec le module d'extension du routeur dans un fichier de configuration ayant un format du type clé-valeur, le fichier de configuration comprenant un identificateur du module d'extension du routeur, un numéro de port du port enregistré du centre de modules d'extension et la capabilité du module d'extension ; et
déterminer le port enregistré conformément à une correspondance bijective pré-stockée entre le numéro de port du port enregistré du centre de modules d'extension et l'identificateur du module d'extension du routeur, si le comportement prédéterminé survient.

4. Procédé selon la revendication 3, comprenant en outre :
obtenir une requête d'enregistrement de port du module d'extension ;
rechercher un port libre parmi les ports du centre de modules d'extension, enregistrer le module d'extension au port libre et établir une correspondance bijective entre le numéro de port du port enregistré du module d'extension et l'identificateur du module d'extension ;
stocker la correspondance bijective.

5. Procédé selon l'une quelconque des revendications précédentes, dans lequel envoyer au module d'extension, par le port enregistré du module d'extension, une première notification configurée pour indiquer que le comportement prédéterminé survient, comprend :
déclencher un serveur Thrift du module d'extension ;
connecter le centre de modules d'extension avec le serveur Thrift du module d'extension par une communication par socket, et envoyer par le serveur Thrift la première notification au module d'extension par le port enregistré du module d'extension.

6. Routeur comprenant une plate-forme de modules d'extension qui passe des modules d'extension développés par des tiers et un centre de modules d'extension, le routeur comprenant :
un module de contrôle (31), configuré pour contrôler si un comportement prédéterminé survient, où le comportement prédéterminé comprend connecter le dispositif externe au routeur ou déconnecter le dispositif externe du routeur ;
dans lequel le centre de modules d'extension est un programme exécuté sur le routeur ayant un ou plusieurs ports logiciels qui lui sont associés et qui gère les ports logiciels attribués aux modules d'extension, et un port enregistré est un port, déterminé parmi les ports du centre de modules d'extension, qui a une correspondance bijective avec un module d'extension du routeur, et le routeur comprend en outre un module de détermination (32), configuré pour déterminer lequel des ports logiciels du centre de modules d'extension est un port logiciel enregistré d'un module d'extension du routeur si le module de contrôle (31) contrôle que le comportement prédéterminé survient ; et
un module de signalement (33) configuré pour envoyer, par le port logiciel enregistré du module d'extension, une première notification au module d'extension, où la première notification est configurée pour indiquer que le comportement prédéterminé survient.

7. Routeur selon la revendication 6, dans lequel le module de contrôle (31) comprend :
une unité de contrôle, configurée pour contrôler si une notification est reçue d'une interface externe, où la notification de l'interface externe est configurée pour indiquer que le comportement prédéterminé survient, et l'interface externe est fournie sur le routeur et est configurée pour connecter le dispositif externe.

8. Routeur selon la revendication 6 ou 7, où le routeur est configuré pour stocker la correspondance bijective avec le module d'extension du routeur dans un fichier de configuration ayant un format du type clé-valeur, le fichier de configuration comprenant un identificateur du module d'extension du routeur, un numéro de port du port enregistré du centre de modules d'extension et la capabilité du module d'extension ; et
le module de détermination (32) comprend :
une unité de détermination, configurée pour déterminer lequel des ports du centre de modules d'extension est le port enregistré du module d'extension du routeur conformément à une correspondance bijective pré-stockée entre le numéro de port du port enregistré du centre de modules d'extension et l'identificateur du module d'extension du routeur, si le module de contrôle (31) contrôle que le comportement prédéterminé survient.

9. Routeur selon la revendication 8, comprenant en outre :
un module d'obtention (41), configuré pour obtenir une requête d'enregistrement de port du module d'extension ;
un module d'établissement (42) configuré pour rechercher un port libre parmi les ports du centre de modules d'extension, enregistrer le module d'extension dans le port libre et établir la correspondance bijective entre le numéro de port du port enregistré du module d'extension et l'identificateur du module d'extension ;
un module de stockage (43), configuré pour stocker la correspondance bijective.

10. Routeur selon l'une quelconque des revendications 6 à 9, dans lequel le module de signalement (33) comprend :
une unité de déclenchement (51), configurée pour déclencher un serveur Thrift du module d'extension ;
une unité de signalement (52), configurée pour connecter le centre de modules d'extension avec le serveur Thrift du module d'extension par une communication par socket, où le serveur Thrift est configuré pour envoyer la première notification au module d'extension par le port enregistré du module d'extension.

11. Programme informatique comprenant des instructions qui, lorsque exécutées sur un processeur à un routeur, font que le processeur exécute toutes les étapes d'un procédé selon l'une quelconque des revendications 1 à 5.
